# EUROPEAN PATENT SPECIFICATION

(11) **EP 4 463 362 B1**
(45) Date of publication and mention of the grant of the patent: **19.11.2025**
(21) Application number: 22798353.3
(22) Date of filing: 10.10.2022
(51) Int. Cl.: B63B 1/12, B63B 35/00, B63B 77/10, B63B 35/44

(54) **HULL STRUCTURE FOR A SEMI-SUBMERSIBLE WIND POWER TURBINE PLATFORM**
RUMPFSTRUKTUR FÜR EINE HALBTAUCHFÄHIGE WINDTURBINENPLATTFORM
STRUCTURE DE COQUE POUR UNE PLATEFORME D'ÉOLIENNE SEMI-SUBMERSIBLE

(30) Priority: 14.01.2022 SE 2250021; 14.01.2022 SE 2250022; 14.01.2022 SE 2250023; 14.01.2022 SE 2250024; 20.06.2022 SE 2250755; 26.08.2022 CN 202211037940; 30.09.2022 SE 2251139
(43) Date of publication of application: 20.11.2024
(73) Proprietor: Bassoe Technology AB, 404 23 Göteborg (SE)
(72) Inventor: ARVIDSSON, Fredrik, 423 41 Torslanda (SE); LIU, Yungang, 433 41 Partille (SE); NILSSON, Joakim, 439 74 Fjärås (SE); LUDWIGSSON, Robert, 413 28 Göteborg (SE); BONDESON, Jimmy, 428 34 Kållered (SE)
(74) Representative: Zacco Sweden AB
(86) International application number: PCT/EP2022/078156
(87) International publication number: WO 2023/134888

(56) References cited:
- EP-A1- 2 789 847
- WO-A1-2020/167137
- WO-A1-2021/219787
- WO-A1-2021/254990
- CN-A- 108 715 214

## Description

### TECHNICAL FIELD

This invention relates to a hull structure for a semi-submersible wind power turbine platform. The invention also relates to a method for loading a set of hull structures of the above type onto a semi-submersible cargo carrying marine vessel, and to a marine vessel carrying a set of hull structures of the above type.

### BACKGROUND OF THE INVENTION

There is a growing interest for offshore wind power, i.e. sea-based wind power stations/turbines that produce electricity. Such a wind turbine may have a fixed underwater foundation or, in particular at water depths larger than around 50-60 m, may be arranged on a floating platform anchored to the bottom.

A floating wind power turbine platform may be of a semi-submersible type comprising a semi-submersible hull structure onto which a wind turbine tower is arranged. The hull structure is typically made up of a plurality of stabilizing buoyant columns connected by submersible buoyant pontoons or other connection members. The turbine tower is typically arranged onto one of the columns. An example of a semi-submersible wind power turbine platform is disclosed in WO2021/219787.

Platforms of this type are large constructions. For instance, each column of a 10 MW wind power turbine platform may have a height of 30 m and the distance between the columns may be 60-80 m. The total weight of the hull structure may be more than 3000 tonnes. The turbine tower may extend up to, say, 150 m above sea level and each turbine blade may be more than 100 m long.

A challenge in the field of offshore wind power is manufacturing, transportation and installation of the semi-submersible platforms. Towing of a platform with the wind turbine tower and blades etc. installed is complicated and challenging, and to reduce the towing distance for such a complete platform it is preferably arranged so that the turbine tower and the turbine blades etc. are installed onto the hull structure in a sheltered location relatively close to the final offshore location. A particular transportation challenge arises if the hull structure is manufactured at a construction yard located far away from the sheltered location, for instance because there is no construction yard suitable for such large and heavy hull structures available at or near the sheltered location. In such a situation the hull structures need to be transported a relatively long distance.

A further challenge with regard to semi-submersible wind power turbine platforms is to design the hull structure so that the platform becomes robust and stable also under harsh offshore conditions and so that the platform withstands many years of operation under such conditions.

A still further challenge is of course that manufacturing, transportation, installation, operation, etc. of the platform or hull structure must be cost efficient for keeping and increasing the interest for offshore wind power.

### SUMMARY OF THE INVENTION

An object of this invention is to provide a hull structure for a semi-submersible wind power turbine platform where the hull structure exhibits improved properties with regard to stowing/loading onto a marine transportation vessel, which, without compromising the robustness and stableness of the hull structure, in turn provides for a more cost efficient transportation of hull structures. A further object is to provide a method for loading a set of such hull structures onto a semi-submersible cargo carrying marine vessel.

The hull structure concerns a hull structure for a semi-submersible wind power turbine platform, wherein the hull structure comprises: first, second and third buoyant stabilizing columns extending in a substantially vertical direction; and first, second and third elongated submersible buoyant pontoon structures extending in a substantially horizontal direction; wherein the hull structure has a general shape of a triangle in the horizontal plane with the first, second and third pontoon structures forming sides of the triangle.

The first pontoon structure extends between and connects the first and the second column and the first pontoon structure is connected to a lower part of each of the first and second columns. Similarly, the second pontoon structure extends between and connects the second and the third column and the second pontoon structure is connected to a lower part of each of the second and third columns. Further, the third pontoon structure extends between and connects the first and the third column at the lower parts thereof.

Each of the first, second and third pontoon structures has an upper side facing upwards. The third pontoon structure has a height that is less than that of each of the first and second pontoon structures. The third pontoon structure is arranged so that the upper side thereof is located at a lower level than the upper side of each of the first and second pontoon structures.

Thus, in short the hull structure of this disclosure resembles principally a Δ-shape in the horizontal plane with three buoyant pontoon structures forming sides of a triangle and connecting three columns located at the corners of the triangle/Δ-shape. A wind turbine tower may be arranged on one of the three columns, or alternatively on an additional column or support arranged onto the hull structure. The Δ-shape is relatively simple and provides for a good stability and robustness of the platform.

A particular arrangement of the hull structure of this disclosure is that the height of the third pontoon structure is less than that of each of the first and second pontoon structures, i.e. the thickness of the third pontoon structure in the vertical direction is less than that of each of the first and second pontoon structures. Further, the third pontoon structure is arranged so that the upper side of the third pontoon structure is located at a lower level in the horizontal direction than that of each of the first and second pontoon structures. In a typical example, the lower sides of the three pontoon structures are substantially aligned in the horizontal plane, and preferably also aligned with the lower sides of the three columns to form a substantially flat lower side of the entire hull structure (which thus can stand steady on flat ground during production). Since the height of the third pontoon structure is less than that of each of the first and second pontoon structures, it follows for such a typical hull structure example that the upper side of the third pontoon structure will be located at a lower level in the horizontal direction than the upper side of each of the first and second pontoon structures.

This particular arrangement provides for the possibility to stow a set of hull structures of the above type efficiently onto a marine transportation vessel by partly "inserting" a second hull structure (i.e. the edge of the Δ-shape where the second column is located) between the first and second pontoon structures of an adjacent first hull structure above and onto the third pontoon structure of the first hull structure. The second hull structure, when stowed this way, occupies a slightly inclined position in the horizontal plane and is supported partly by the first hull structure (the third pontoon structure and e.g. a particular support surface of the first hull structure supports the second hull structure) and partly by a deck of the marine vessel (the third pontoon structure of the second hull structure and possibly also the first and third columns thereof are located onto and supported by the deck). A row of several Δ-shaped hull structures can be stowed efficiently this way, where at least the second, third, fourth etc. hull structure in the row will occupy the slightly inclined position and where the first hull structure in the row may or may not be inclined in relation to the horizontal plane. The structure of the stowing arrangement and the procedure for achieving the stowing is explained more in detail further below.

A main effect of designing the hull structure as given above is that a higher number of platforms can be loaded onto the same marine transportation vessel, e.g. for transport between the construction yard to the sheltered location where the wind turbine is to be installed, which in turn reduces the transportation costs.

Conventional Δ-shaped hull structures are not adapted to be stowed in any particularly efficient way on marine transportation vessels. Where transportation is at all discussed, one idea seems to be to simply place a hull structure beside another hull structure onto the marine vessel, which is not efficient stowing. The three connection or pontoon structures of conventional Δ-shaped hull structures are far too large and high to allow efficient stowing of the type described above.

Another idea is to transport hull structures in an only partly assembled state that increases stowing efficiency, for instance by letting one of the pontoon structures form a separate part not yet connected to a column at each end. However, this requires advanced assembly work to be conducted after the transportation which may not be possible or at least will be complicated and costly.

As will be described further below, the hull structure of the present disclosure provides for transporting around four to five hull structures on a marine vessel that could carry only two hull structures of similar size if they were designed the conventional way and placed side by side onto the marine vessel. Since transportation of large hull structures is very costly, a significant cost-efficiency can be attained by letting the transportation vessel carry a higher number of hull structures.

That the platform, and the hull structure, is semi-submersible means that the platform/hull structure can be partly located beneath the water surface when in operation. The entire pontoon structures and parts of the columns are typically to be located beneath the surface. Anchoring/securing of the platform/hull structure to the bottom can be arranged in different ways, e.g. catenary mooring, taut-leg mooring or tendon mooring.

That a pontoon structure is arranged at the lower part of a column means that it is arranged somewhere in a lower region of the column; it does not necessarily mean that it is arranged at the lowest end part of the column. The lower region of the columns, and thus also the pontoon structures, will typically be submersed when the platform is in operation.

The width and length of the third pontoon structure may differ from that of the first and second pontoon structures.

In an embodiment, each of the first, second and third pontoon structures has a lower side facing downwards and wherein the lower sides of the first, second and third pontoon structures are substantially aligned with each other in the horizontal plane.

In an embodiment, the lower sides of the first, second and third pontoon structures are substantially aligned with downwardly facing lower sides of each of the first, second and third buoyant stabilizing columns. As mentioned above, the underside of the entire hull structure will then be substantially flat.

In an embodiment, each of the first and second pontoon structures has a lower side facing downwards and wherein the upper side of the third pontoon structure is substantially aligned with, or is located at a lower level than, the lower sides of the first and second pontoon structures.

Such platforms can be stowed in the same efficient manner as described above and may simplify the stowing operation since platforms according to this embodiment do not have to be stowed in an inclined position.

In an embodiment, the lower sides of the first and second pontoon structures are substantially aligned with a downwardly facing lower side of the second buoyant stabilizing columns. Thereby, the second column of a first platform can be placed onto and be supported by the third pontoon structure of a second platform when the platforms are stowed. To hold such a platform in a horizontal position when there is no third pontoon structure available, such as a platform located at an end of a row of similar platforms, it is possible to arrange a separate support structure beneath the second column.

In an embodiment, the lower sides of the first and second pontoon structures are substantially aligned with a (first) portion of a downwardly facing lower side of the second buoyant stabilizing column, wherein another (second) portion of the downwardly facing lower side of the second buoyant stabilizing columns is located at a lower level. Typically, the (second) portion located at the lower level is substantially aligned with the underside of the third pontoon as well as the underside of each of the first and third columns. Besides that a first platform can be stowed close to second platform with the first portion of its lower side arranged onto the third pontoon of a second platform, the second low-level portion of the lower side of the second column provides an integral support towards the ground (or vessel deck) that holds the platform in a horizontal position.

In an embodiment, the lower side of the third pontoon structure is substantially aligned with downwardly facing lower sides of each of the first and third buoyant stabilizing columns.

In an embodiment, the lower side of the third pontoon structure is substantially aligned with a portion of each of the downwardly facing lower sides of the first and third buoyant stabilizing columns, wherein another portion of the downwardly facing lower side of each of the first and third buoyant stabilizing columns is located at a higher level.

In an embodiment, the height of the third pontoon structure is less than 75%, preferably less than 50%, of the height of at least one of the first and second pontoon structures. In an example, the height of each of the first and second pontoon structures is around 7 m while the height of the third pontoon structure is around 3 m, thus less than 50% of the height of the first and second pontoon structures. In a further example, the height of the third pontoon structure is 2-4 m.

In an embodiment, the height of the third pontoon structure is at least 1 m, preferably at least 2 m or at least 3 m, smaller than the height of at least one of the first and second pontoon structures.

In an embodiment, the first, second and third pontoon structures have a substantially equal length. The hull structure can thus have the general shape of an equilateral triangle.

In an embodiment, the hull structure exhibits: i) a first angle in the horizontal plane between a central longitudinal axis of the first pontoon structure and a central longitudinal axis of the second pontoon structure; and ii) a second angle in the horizontal plane between a) a first imaginary line between a central point of the first stabilizing column and a central point of the second stabilizing column and b) a second imaginary line between the central point of the second stabilizing column and a central point of the third stabilizing column, wherein the second angle is larger than the first angle.

This means that the first and second pontoon structures do not extend along nor in parallel with the corresponding imaginary straight line between the central points of the second column and the first or third column, but that they instead extend in a direction that deviates from the direction given by the central points of the columns. That the second angle is larger than the first angle further means that the deviating direction of extension of the first and second pontoon structures is such that a straight pontoon structure may extend from an outer side part of the second column to an inner side part of the first or third column, where "outer" and "inner" refers to a central point of the hull structure in the horizontal plane, but not that the straight pontoon structure may extend from an inner side part of the second column to an outer side part of the first or third column.

The central points mentioned above correspond to the centroids of the columns at a level associated with the lower parts thereof.

An effect of arranging the hull structure so that it exhibits first and second angles according to above is that it improves the stowing efficiency further; the hull structures can be stowed even tighter. That the first and second angles and their relation actually provide for this effect is explained and shown further below.

In an embodiment, each of the first and the second pontoon structures has, at least along a major part of its length, a width that is less than a width of the lower part of the second stabilizing column. That is, the general width of the first and second pontoon structures is less than that of the second column at the part of the second column where the pontoon structures are connected. The second column may have a width that varies in the vertical direction, such as a cone. The width of the lower part of the second stabilizing column means the width in a direction perpendicular to a longitudinal axis of the respective pontoon structure. The width of the lower part of the second stabilizing column can be a diameter of the second column if it has a circular cross section or more general a distance from opposite sides if the cross section is e.g. polygonal. Typically, the first and second pontoon structures have a width that also is less than that of the first and third columns.

That the first and second pontoon structures are more narrow than the second column is particularly useful in combination with arranging the first and second angles mentioned above. These angles can then be arranged by positioning the first or second pontoon structure so that an outer side thereof, i.e. the side of the pontoon structure facing away sideways from the hull structure, is located at a first distance from an outer side of the second column while an inner side of the pontoon structure (opposite to the outer side thereof) is located at a second distance from an inner side of the second column, wherein the first distance is shorter than the second distance. The other end of the pontoon structure should then be properly positioned at the first or third column so that the second angle becomes larger than the first angle. This other end of the pontoon structure may be positioned centrally in relation to the first or third column or, to increase the difference between first and second angles, be positioned closer to an inner side of the first or third column.

In an embodiment, each of the first and second pontoon structures has an outer side facing away sideways from the hull structure, wherein the outer side of at least one of the first and second pontoon structures is substantially aligned with an outer side of the second stabilizing column. The outer side of the pontoon structure may thus be substantially tangential with a bent side surface section of the second column (if e.g. having a circular cross section) or be substantially aligned with a planar surface section of the second column (if having e.g. a polygonal cross section).

This embodiment may be combined with arranging the other end of the pontoon structure at the first or third column close to or substantially aligned with the inner side of the first or third column. This gives a large difference between the first and second angles and improves stowing efficiency.

In an embodiment, each of the first and second pontoon structures has an outer side facing away sideways from the hull structure and an inner side facing inwards towards the hull structure, wherein at least one of the first and second pontoon structures is arranged such that the outer side thereof is located closer to a corresponding outer side of the second stabilizing column than the inner side thereof is located in relation to a side of the second stabilizing column opposite the outer side of the second stabilizing column.

A pontoon structure arranged this way is thus not centrally arranged onto the second column but arranged closer to the outer side thereof. The outer side of the pontoon structure may be substantially aligned with the outer side of the second stabilizing column to increase the difference between the first and second angles. However, fixation of the pontoon structure to the column is typically simplified if there is some distance between the outer side of the pontoon structure and the column, i.e. if the outer sides of the pontoon structure and the column are not fully aligned. A further reason for not fully aligning the outer sides of the pontoon structure and the second column is that it may be that some distance is desired between the first and second pontoon structures of adjacent hull structures stowed onto a transportation vessel.

In an embodiment, at least an outer part of a lower side of the third pontoon structure is inclined in relation to the horizontal plane, wherein the inclination is arranged so that the outer part of the lower side of the third pontoon structure is located on a higher vertical level than an inner part of the lower side of the third pontoon structure, wherein the inner part is located closer to the second stabilizing column than the outer part.

An inclined surface is thus provided on the lower side of the third pontoon structure which is useful for providing support for the hull structure when stowed onto the marine vessel in the slightly inclined position. The inclination of the support surface should correspond to the inclined position of the stowed hull structure. The exact measure of this inclination depends on the exact measures of the hull structure and it typically varies depending on e.g. size and type of hull structure. An inclination angle in the interval 5-15° is believed to be useful in most applications. Possibly, 8-10° is a suitable interval.

In an embodiment, at least a part of a lower side of the first and third stabilizing columns is inclined in relation to the horizontal plane, wherein the inclination is arranged to correspond to the inclination of the lower side of the third pontoon structure. If also the first and third columns are located onto the deck of the transportation vessel, the hull structure is better supported if also the first and third columns are provided with an inclined support surface. Depending on the size of the hull structures and the width of the transportation vessel, it may be that the first and third columns become located outside of the deck, on opposite sides thereof, when the hull structures are arranged onto the vessel. In such situations it may still be an advantage in providing the first and third columns with inclined support surfaces as it may simply manufacture (since it may be easier to connect surfaces that have the same inclination).

In an embodiment, the upper side of the third pontoon structure is inclined in relation to the horizontal plane, wherein the inclination is arranged so that an outer part of the upper side of the third pontoon structure is located on a lower vertical level than an inner part of the upper side of the third pontoon structure, wherein the inner part is located closer to the second stabilizing column than the outer part. This forms an inclined support surface on the upper side of the third pontoon structure. It is an advantage if at least a first hull structure in a row of hull structures to be stowed onto a marine transportation vessel is provided with such an inclined support surface since this allows the first hull structure to positioned horizontally onto the vessel while still providing an inclined support surface for the next hull structure in the row. The lower side of the third pontoon structure may in this embodiment be horizontal.

As mentioned above for the inclined support surface on the lower side, also the inclination of the upper support surface should correspond to the inclined position of the stowed hull structure, i.e. the "next" hull structure. Again, the inclination may be 5-15°, or 8-10°. The "next" hull structure and further hull structures along the row will not be inclined in relation to each other and therefore it may not be any advantage in providing more than one hull structure in one set or row of hull structures with an inclined support surface on the upper side of the third pontoon structure.

As an alternative, the first hull structure in the row may be arranged in an inclined position using special supports arranged onto the deck of the vessel. In such a case it may not be any advantage in providing any of the hull structures in one set or row of hull structures with an inclined support surface on the upper side of the third pontoon structure.

In an embodiment, the hull structure comprises a supporting structure arranged at the second stabilizing column between the first and second pontoon structures. This supporting structure may be adapted to both strengthen the hull structure as a whole as well as to provide a support surface for the second column of a further hull structure stowed at and partly onto the hull structure provided with the supporting structure.

The supporting structure is preferably provided with a supporting surface arranged at substantially the same vertical height as the upper side of the third pontoon structure. The supporting surface will thus be located below the upper sides of the first and second pontoon structures. The combination of i) such a supporting surface at the second column between lower parts of the first and second pontoon structures and ii) the upper side of the third pontoon structure form together a good support for the further hull structure stowed at and partly onto the hull structure provided with the supporting structure.

In an embodiment, the hull structure comprises a controllable ballast system configured to allow control of an inclination of the hull structure when floating in water. Besides that a controllable ballast system is useful during operation of the semi-submersible wind power turbine platform, it is useful when arranging a set of hull structures in a row before loading them onto a marine transportation vessel as further described below.

The invention also relates to a method for loading a set of hull structures onto a semi-submersible cargo carrying marine vessel configured to be lowered partly below the water surface into a lower position and be raised to an upper position so as to load onto the vessel cargo that is located at the water surface above the vessel, wherein the set of hull structures comprises at least a first and a second hull structure of the above type. Marine vessels of this type are known as such. During transport the hull structures are located above the water surface.

The method comprises: providing the set of hull structures floating in water; arranging the set of hull structures in a row above the marine vessel when the marine vessel is in its lower position; and raising the marine vessel to its upper position so as to load the row of hull structures onto the marine vessel.

In an embodiment, the step of arranging the set of hull structures in the row comprises: arranging the first and second hull structures adjacent each other and so that the second hull structure is located above the third pontoon structure of the first hull structure with the second column of the second hull structure positioned between the first and second pontoon structures of the first hull structure, wherein the second column of the second hull structure is positioned closer to the second column of the first hull structure than to the first and third columns of the first hull structure.

In an embodiment the method comprises: setting (e.g. ballasting) at least one of the first and second hull structures in an inclined position so as to allow the second hull structure to float above the third pontoon structure of the first hull structure into position adjacent the first hull structure.

As an example, the first hull structure may be positioned more or less horizontally and loaded to a slightly deeper draught while the second hull structure may be set in an inclined position so that the third pontoon structure becomes located at some distance below the water surface and so that the second column of the second hull structure is raised with its lower side located close to the water surface. Such an inclination may be provided by using a controllable ballast system arranged onto the hull structure. After having towed the second hull structure in position close to the first hull structure, the two hull structures may be fixed to each other. A third hull structure to be located adjacent the second hull structure in the row can be set in a similar inclined position, towed into place and be fixed to the second hull structure. A similar procedure can be used for e.g. a fourth and a fifth hull structure to form a row of five hull structures.

In an embodiment, the first hull structure in the row is provided with a supporting structure arranged at the second stabilizing column between the first and second pontoon structures, as described above, wherein the method comprises: locating the second column of the second hull structure onto the supporting structure of the first hull structure. As mentioned above, the supporting structure may include a supporting surface located at the same height as the upper side of the third pontoon structure. Preferably, all hull structures in the set of hull structures are provided with such a supporting structure. The method may then comprise: locating the second column of the second hull structure onto the supporting surface of the first hull structure, and: locating the first and second pontoon structures of the second hull structure onto the upper side of the third pontoon structure of the first hull structure. The second hull structure can then be supported by the support surface and the third pontoon structure of the adjacent first hull structure. When the hull structures are loaded onto the vessel, the second structure is then supported also by its own third pontoon structure that is located onto the deck of the vessel.

In an embodiment, the first hull structure in the row is provided with an inclined support surface on the upper side of the third pontoon structure as described above. The first hull structure can then be arranged horizontally onto the vessel while still providing a properly inclined support surface. An additional support member may be used to provide good support for the next hull structure in the row.

In an embodiment, the second hull structure in the row provided with an inclined support surface on the lower side of the third pontoon structure (and possibly also the lower sides of the first and third columns) as described above. The second hull structure can then be positioned in a slightly inclined position onto the vessel with a properly inclined support surface facing the deck of the vessel. The first and second pontoon structures of the second hull structure can be positioned onto and supported by the third pontoon structure of the adjacent first hull structure. Further, the second column of the second hull structure can be positioned onto and be supported by a support surface of the first hull structure close to the second column of the first hull structure.

In an embodiment, the step of arranging the set of hull structures in the row comprises: arranging the first and second hull structures adjacent each other and so that the first and second pontoon structure of the second hull structure is located above the third pontoon structure of the first hull structure with the second column of the second hull structure positioned between the first and second pontoon structures of the first hull structure, wherein the second column of the second hull structure is positioned closer to the second column of the first hull structure than to the first and third columns of the first hull structure.

The invention also relates to a marine vessel carrying a set of hull structures, wherein the set of hull structures comprises at least a first and a second hull structure of the above type.

In an embodiment, the set of hull structures are arranged in a row with the first and second hull structures located adjacent each other, wherein the second hull structure is located above (onto) the third pontoon structure of the first hull structure with the second column of the second hull structure positioned between the first and second pontoon structures of the first hull structure, wherein the second column of the second hull structure is positioned closer to the second column of the first hull structure than to the first and third columns of the first hull structure.

In an embodiment, the second column of the second hull structure is located onto, and supported by, the above mentioned supporting surface of the first hull structure.

When loaded onto the vessel, at least a third hull structure in the row of hull structures is supported by the support surface and upper side of the third pontoon structure of an adjacent hull structure as well as by its own third pontoon structure that is located onto the deck of the vessel.

### BRIEF DESCRIPTION OF DRAWINGS

In the description of the invention given below reference is made to the following figure, in which:
Figure 1 shows a perspective view of a first embodiment of a hull structure according to this disclosure.
Figures 2A and 2B show a top view (fig. 2A) and a longitudinal section view (fig. 2B) of a second embodiment of a hull structure according to this disclosure.
Figures 3A and 3B show a top view (fig. 3A) and a longitudinal section view (fig 3B) of a third embodiment of a hull structure according to this disclosure.
Figure 4 shows a perspective view of the hull structure of figures 3A and 3B, further provided with a support for a wind turbine tower.
Figure 5 shows, in a schematic side view, a first set of hull structures stowed in a row onto a deck of a marine transportation vessel.
Figures 6A and 6B show, in schematic side views, a second set of hull structures stowed in a row onto a deck of a marine transportation vessel (fig. 6B), where a first hull structure to the right has a special design (fig. 6A).
Figures 7A and 7B show first and second perspective views of a set of hull structures stowed in a row onto a deck of a marine transportation vessel.
Figures 8A-8F show in a stepwise manner how to arrange the set of hull structures according to figures 7A and 7B onto the deck of the marine transportation vessel.
Figures 9A-9D show a comparison of stowing efficiency between sets of hull structures with different hull structure design.
Figure 10 shows a semi-submersible wind power turbine platform comprising a hull structure according this disclosure.
Figure 11 shows a perspective view of a further embodiment of a hull structure according to this disclosure.
Figure 12 shows a side view of a further embodiment of a hull structure according to this disclosure.
Figure 13 shows a set of hull structures according to figure 12 stowed in a row.
Figure 14 shows a side view of the embodiment according to figure 11.
Figure 15 shows a set of hull structures according to figure 14 stowed in a row.
Figure 16 shows a perspective view of a still further embodiment of a hull structure according to this disclosure.

### DESCRIPTION OF EXAMPLE EMBODIMENTS OF THE INVENTION

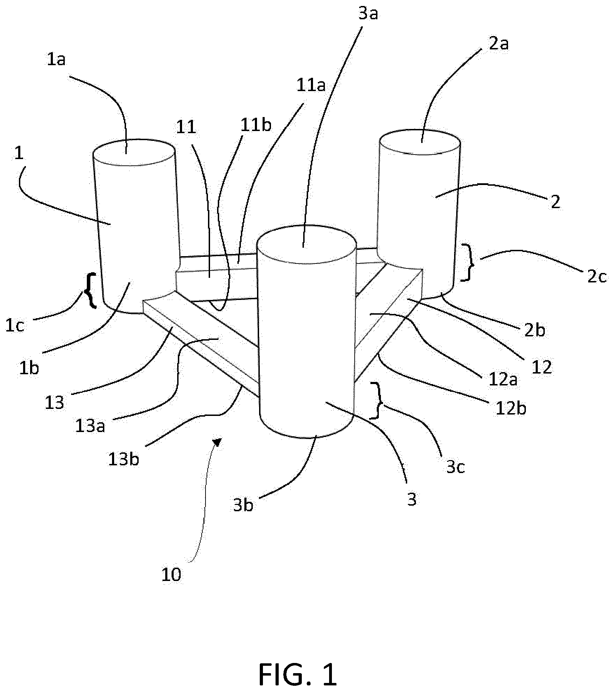

Figure 1 shows a first embodiment of a hull structure 10 for a semi-submersible wind power turbine platform 100. The hull structure 10 comprises first, second and third buoyant stabilizing columns 1, 2, 3 extending in a substantially vertical direction and first, second and third elongated submersible pontoon structures 11, 12, 13 extending in a substantially horizontal direction. The hull structure 10 has a general shape of a triangle in the horizontal plane with the first, second and third pontoon structures 11, 12, 13 forming sides of the triangle. In this example the first, second and third pontoon structures 11, 12, 13 have a substantially equal length and the hull structure forms, roughly described, an equilateral triangle with a column in each corner.

As an example of size, the columns 1, 2, 3 may have a height of around 30-35 m and a diameter of around 13 m. Each of the pontoon structures 11, 12, 13 may have a length of around 50-70 m and a width of 6-10 m. The height of the first and second pontoon structures 11, 12 may have a height of 6-9 m.

The first pontoon structure 11 extends between and connects the first and the second column 1, 2, and the first pontoon structure 11 is connected to a lower part 1c, 2c of each of the first and second columns 1, 2. The second pontoon structure 12 extends between and connects the second and the third column 2, 3, and the second pontoon structure 12 is connected to a lower part 2c, 3c of each of the second and third columns 2, 3. The third pontoon structure 13 extends between and connects the first and the third column 1, 3, and the third pontoon structure 13 is connected to a lower part 1c, 3c of each of the first and third columns 1, 3. The lower parts 1c, 2c, 3c of the columns 1, 2, 3 are in this case the lowest possible part of the columns. All three pontoon structures 11, 12, 13 are in this case buoyant pontoon structures.

Each of the first, second and third pontoon structures 11, 12, 13 has a lower side 11b, 12b, 13b facing downwards. These lower sides 11b, 12b, 13b are substantially aligned with each other in the horizontal plane and also with downwardly facing lower sides 1b, 2b, 3b of each of the first, second and third buoyant stabilizing columns 1, 2, 3.

Further, each of the first and the second pontoon structures 11, 12, has a width that is less than a width of the lower part 2c of the second stabilizing column 2. As shown in figure 1, all pontoon structures 11, 12, 13 are straight and has a non-varying width. In other embodiments, the first and the second pontoon structures 11, 12 may have another design.

As can be seen in figure 1, the third pontoon structure 13 has a height that is less than that of each of the first and second pontoon structures 11, 12. Since the pontoon structures in figure 1 are arranged on the same level, it follows that the third pontoon structure 13 is arranged so that its upper side 13a is located at a lower level in the horizontal direction than an upper side 11a, 12a of each of the first and second pontoon structures 11, 12. As will be further described below, a main purpose of the particular structure and arrangement of the third pontoon structure 13 is that it allows for a more space-efficient stowing of hull structures on a marine transportation vessel and thus allows for the vessel to carry a higher number of hull structures.

In the example shown the height of the third pontoon structure 13 is around 3 m, whereas the height of the first and second pontoon structures 11, 12 is around 7 m. The height of the third pontoon structure 13 is thus less than 50% of the first and second pontoon structures 11, 12.

The hull structure 10 is further provided with a controllable ballast system (not shown in figures) configured to allow control of an inclination of the hull structure 10 when floating in water.

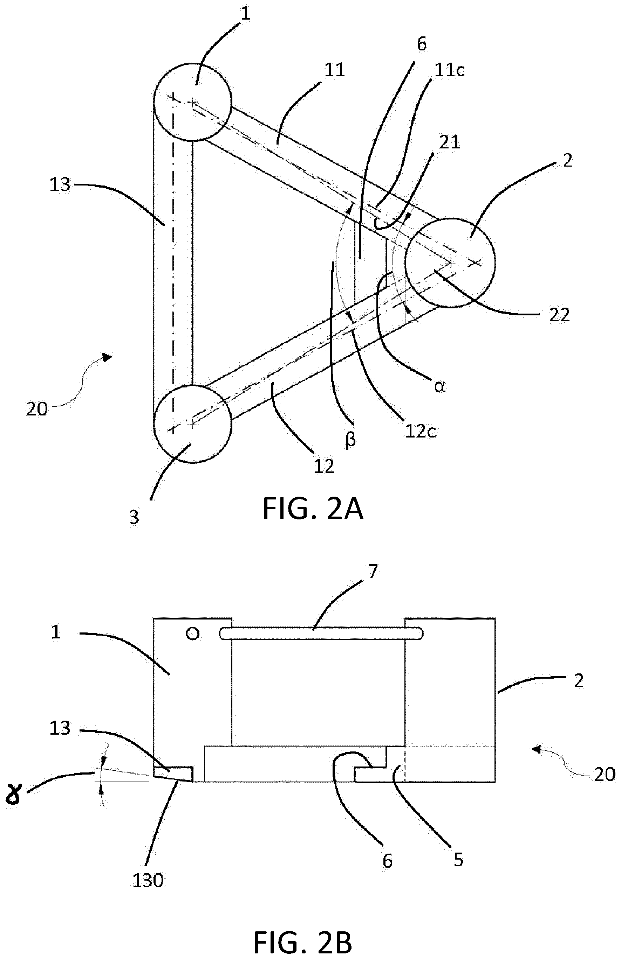

The embodiments of the hull structures shown in figures 2-10 are principally structured in a similar way as the hull structure 10 shown in figure 1, and therefore the same reference numbers have been used in all figures for similar components.

Figures 2A-2B show a top view (fig. 2A) and a longitudinal section view (fig. 2B) of a second embodiment of a hull structure 20 for a semi-submersible wind power turbine platform 100.

As shown in figure 2A, the hull structure 20 exhibits a first angle α in the horizontal plane between a central longitudinal axis 11c of the first pontoon structure 11 and a central longitudinal axis 12c of the second pontoon structure 12 (i.e. an angle between centre-line axes of the first and second pontoon structures). The hull structure 20 further exhibits a second angle β in the horizontal plane between a) a first imaginary line 21 between a central point of the first stabilizing column 1 and a central point of the second stabilizing column 2 and b) a second imaginary line 22 between the central point of the second stabilizing column 2 and a central point of the third stabilizing column 3. As further shown in figure 2A, the second angle β is larger than the first angle α. This further improves the space-efficiency of the stowing of hull structures, as will be described further below.

As shown in figure 2B, the lower side 13b of the third pontoon structure 13 is inclined in relation to the horizontal plane so as to form an inclined surface 130. The inclination has an angle γ in relation to the horizontal plane and it is directed so that an outer part of the lower side 13b of the third pontoon structure 13 is located on a higher vertical level than an inner part of the lower side 13b of the third pontoon structure 13, wherein the inner part is located closer to the second stabilizing column 2 than the outer part. The inclined surface 130 forms a support surface for the hull structure 20 when stowed in a slightly inclined position (at an angle γ) onto a deck of a transportation vessel, which is further described below. Also a part of a lower side 1b, 3b of the first and third stabilizing columns 1, 3 is inclined at an angle γ in relation to the horizontal plane so as to correspond to the inclined surface 130.

The hull structure 20 is further provided with a supporting structure 5 arranged at the second stabilizing column 2 between the first and second pontoon structures 11, 12. The supporting structure 5 connects the first and second pontoon structures 11, 12 and also the entire hull structure 20. The supporting structure 5 comprises a supporting surface 6 extending between the first and second pontoon structures 11, 12 at a height corresponding to that of the upper side 13a of the third pontoon structure 13. The supporting surface 6 functions as a support for an adjacent hull structure when stowing a set of hull structures onto a transportation vessel, as will be further described below.

The hull structure 20 is further provided with braces 7 that extend between and connect the columns 1, 2, 3 in a principally similar way as the pontoon structures 11, 12, 13, but the braces are arranged between upper parts of the columns 1, 2, 3. The brace between the first and third columns 1, 3 is not mounted when the hull structure is (to be) stowed for transport since it would obstruct close stowage. End parts of that bracing might be prefixed to the first and third columns, and the remaining part can be mounted after transport. Assembling of a brace after transport is generally not too complicated.

A further difference between the hull structures of figures 1 and 2A-2B is that the second column 2 of the hull structure 20 of figures 2A-2B is somewhat larger (in diameter) compared to the first and third columns 1, 3. A purpose of this is to provide better support conditions for arranging a wind turbine tower onto the second column 2. A further purpose may be to adjust a longitudinal center of flotation (LCF) of the hull structure since a larger diameter of the second column means a larger cross sectional area, which in turn means that the second column will exhibit a larger waterplane area than the other columns when the hull structure/platform is in operation with the pontoon structures located beneath the water surface and the columns extending through the water surface. The position of the LCF depends on the waterplane areas of the columns and adjusting the LCF can reduce motions of the hull structure/platform during operation at open sea.

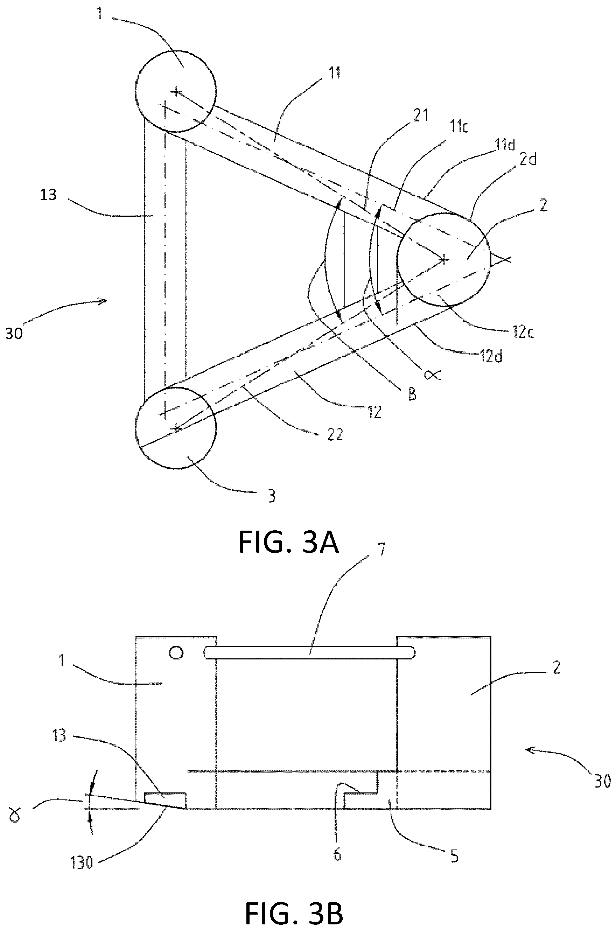

Figures 3A-3B shows a top view (fig. 3A) and a longitudinal section view (fig 3B) of a third embodiment of a hull structure 30. The hull structure 30 of figures 3A-3B is principally similar to the hull structure 20 of figures 2A-2B. The difference is mainly that the first and second pontoon structures 11, 12 of the hull structure 30 are arranged so as to decrease the first angle α and thus to increase the difference between the second angle β and the first angle α. The first angle α may be further decreased by using a second column with larger diameter.

As shown in figure 3A, each of the first and second pontoon structures 11, 12 has an outer side 11d, 12d facing away sideways from the hull structure 30. In the embodiment of figure 3, the first and second pontoon structures 11, 12 are arranged so that the outer side 11d, 12d of each of the first and second pontoon structures 11, 12 is substantially aligned with an outer side 2d of the second stabilizing column 2. In addition, the opposite ends of the first and second pontoon structures 11, 12 are substantially aligned with an inner side of the first and third stabilizing column 1, 3, respectively.

This further increased difference between the second angle β and the first angle α further improves the capability of the hull structure 30 to be stowed in a space-efficient manner onto the marine transportation vessel.

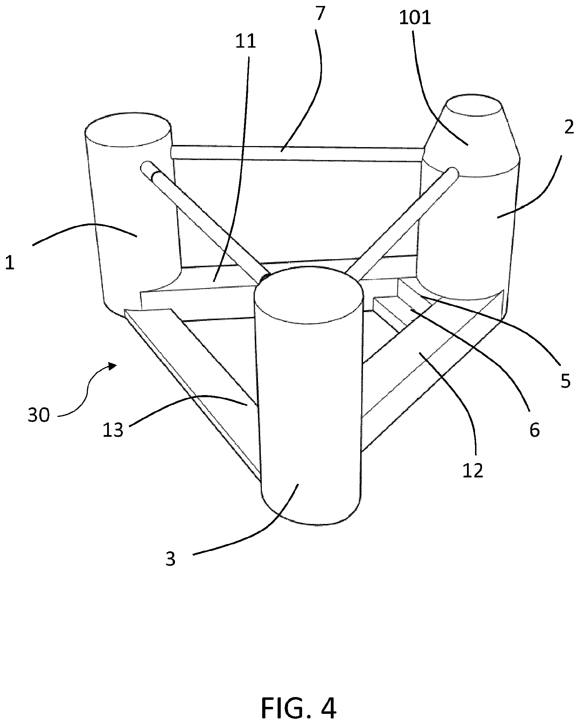

Figure 4 shows a perspective view of the hull structure 30 of figure 3, further provided with an interface/support 101 for a wind turbine tower arranged on top of the second stabilizing column 2.

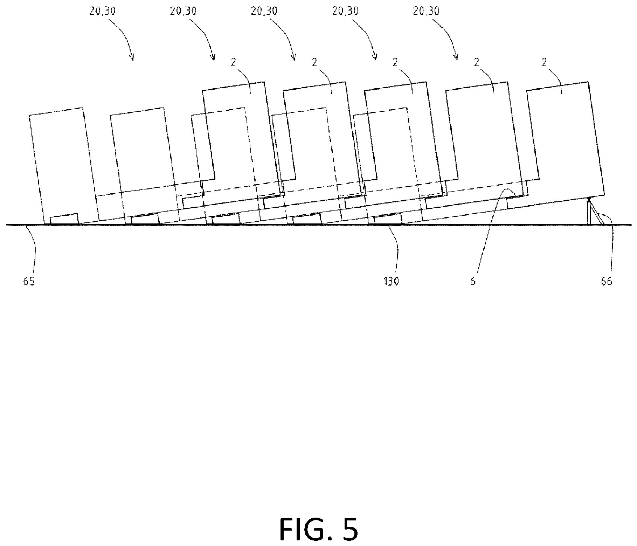

Figure 5 shows, in a schematic side view, a first set of hull structures 20, 30, in this example five hull structures, stowed in a row onto a deck 65 of a marine transportation vessel. The hull structures in figure 5 may be of the type shown in figure 2 or 3. All five hull structures occupy an inclined position with an inclination angle γ corresponding to the inclined surface 130 on the lower side 13b of the third pontoon structure 13. The hull structure to the far right is supported below its second column 2 by a support 66 arranged on the deck 65 of the vessel. Remaining hull structures are stowed and supported in the same way, i.e. the second column 2 is supported by the supporting surface 6 of an adjacent hull structure and the inclined support surface 130 is flush with and supported by the deck 65. Further, the first and second pontoon structures 11, 12 of all these remaining hull structures are located onto and supported by the third pontoon structure 13 of the adjacent hull structure.

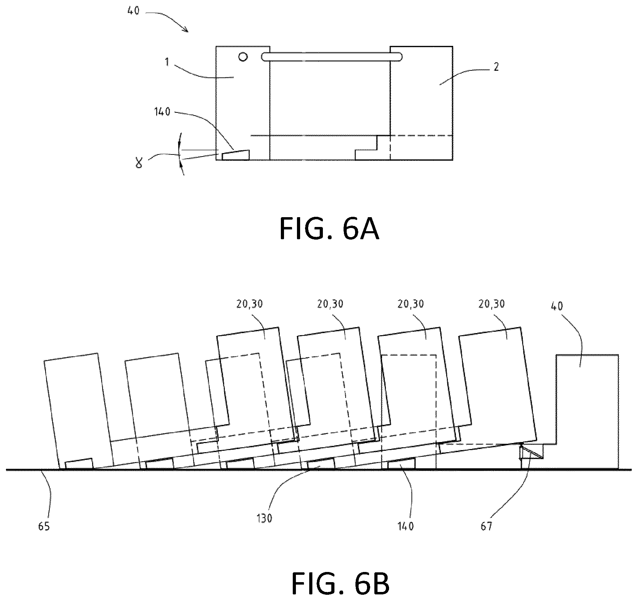

Figures 6A-6B show, in schematic side views, a second set of hull structures 20, 30, 40, in this example five hull structures, stowed in a row onto a deck 65 of a marine transportation vessel (fig. 6B), where a first hull structure 40 to the right has a special design (fig. 6A). Remaining four hull structures 20, 30 may be of the type shown in figures 2A or 3A.

As shown in figure 6A, the special hull structure 40 is not provided with any inclined surface 130 on the lower side 13b of the third pontoon structure 13; instead the lower side 13b is flat. However, the upper side 13a of the third pontoon structure 13 of the hull structure 40 is inclined in relation to the horizontal plane so as to form an upper inclined surface 140. The inclination is arranged so that an outer part of the upper side 13a of the third pontoon structure 13 is located on a lower vertical level than an inner part of the upper side 13a of the third pontoon structure 13, wherein the inner part is located closer to the second stabilizing column 2 than the outer part.

This means that the special hull structure 40 can and should be placed horizontally onto the deck 65 and form an end structure (the "first" structure) in the row of hull structures as shown in figure 6B. This first hull structure 40 is thereby set in a very steady position onto the deck 65 and no additional deck support 66 is needed to set this hull structure in the inclined position. The next (second) hull structure 20, 30 adjacent the first hull structure 40 occupy the inclined position and is supported by the upper inclined surface 140 of the first hull structure 40 as well as by its own lower inclined surface 130 as in figure 5. An additional support 67 may be arranged under the second column 2 of the second hull structure 20, 30. Remaining three hull structures 20, 30 are stowed in the same way as in figure 5.

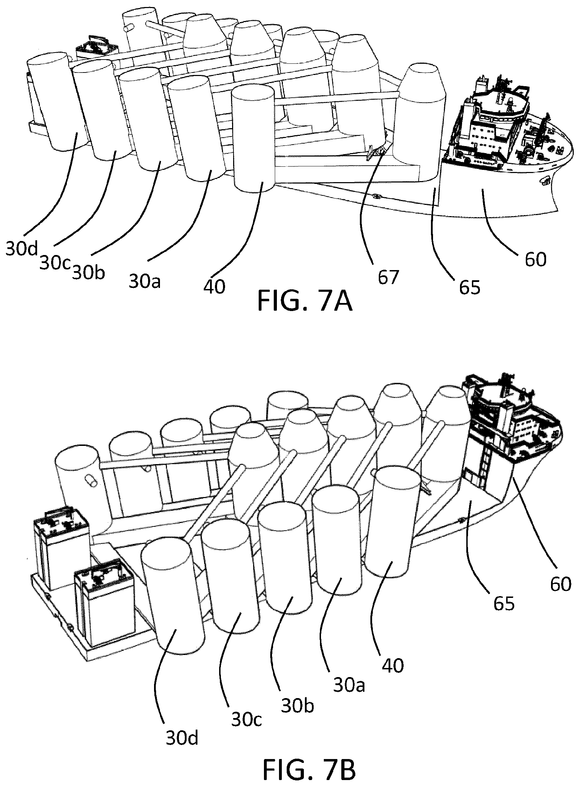

Figures 7A-7B show first and second perspective views of a set of hull structures stowed in a row onto a deck 65 of a marine transportation vessel 60 in the form of a semi-submersible cargo carrying marine vessel configured to be lowered partly below the water surface into a lower position and be raised to an upper position so as to load onto the vessel cargo that is located at the water surface above the vessel.

The row of hull structures in figures 7A and 7B include a first hull structure 40 of the type shown in figure 6A and four further hull structures 30a-30d, each of the type shown in figure 4 (but with a mid-portion of the bracing 7 between the first and third columns 1, 3 removed). The hull structures of figures 7A-7B are stowed onto the deck 65 in a principally similar manner as the hull structures in figure 6B.

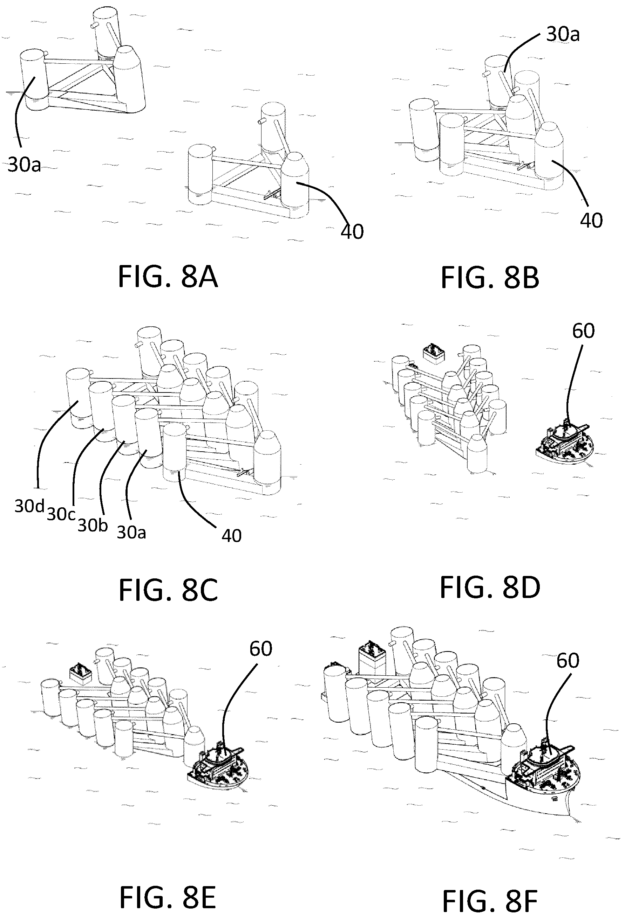

Figures 8A-8F show in a stepwise manner how to arrange the set of hull structures according to figures 7A-7B onto the deck 65 of the marine transportation vessel 60.

A method for loading the set of hull structures 40, 30a-30d onto the semi-submersible cargo carrying marine vessel 60 comprises in general the following steps:
- providing the set of hull structures 40, 30a-30d floating in water (figs. 8A-8D);
- arranging the set of hull structures 40, 30a-30d in a row above the marine vessel 60 when the marine vessel is in its lower position (fig. 8E); and
- raising the marine vessel 60 to its upper position so as to load the row of hull structures 40, 30a-30d onto the marine vessel 60 (fig. 8F).

As shown in figure 8B, the step of arranging the set of hull structures in the row, wherein the set of hull structures comprises at least a first 40 and a second 30a hull structure, may comprise: arranging the first and second hull structures 40, 30a adjacent each other so that the second hull structure 30a is located above the third pontoon structure 13 of the first hull structure 40 with the second column 2 of the second hull structure 30a positioned between the first and second pontoon structures 11, 12 of the first hull structure 40, wherein the second column 2 of the second hull structure 30a is positioned closer to the second column 2 of the first hull structure 40 than to the first and third columns 1, 3 of the first hull structure 40.

As shown in figure 8A, the method may further comprise: setting at least one of the first and second hull structures in an inclined position (in this case the second hull structure 30a, see fig. 8A) and lowering the first hull structure 40 to a slightly larger draught so as to allow the second hull structure 30a to float above the third pontoon structure 13 of the first hull structure 40 into position adjacent the first hull structure 40 (as shown in fig. 8B). The controllable ballast system is used for setting the second hull structure 30a in the inclined position.

As shown in figures 8B-8E, and also figs 6B, 7A and 7B, the method may further comprise: locating the second column 2 of the second hull structure 30a onto the supporting structure 5, 6, 67 of the first hull structure 40.

Remaining hull structures 30b, 30c, 30d are arranged in the row in principally the same way as described above for the first and second hull structures 40, 30a. For instance, the third hull structure 30b in the row is set in the inclined position and moved/towed into position at the adjacent second hull structure 30a that already is positioned in a corresponding inclined position. Since the second and third hull structures 30a, 30b are not inclined in relation to each other, there is no need for the additional support 67. As already described above, the third hull structure 30b is supported (or will be supported when the vessel 60 is raised) by the third pontoon structure 13 and the support surface 6 of the second hull structure 30a. The third hull structure 30b is also supported by its own third pontoon structure that is located onto the deck 65. The procedure for arranging the fourth and fifth hull structure 30c, 30d in the row is similar.

The hull structures 40, 30a-30d are preferably fixed to each other before raising the vessel 60. Wood elements or similar may be placed between the hull structures to prevent damages.

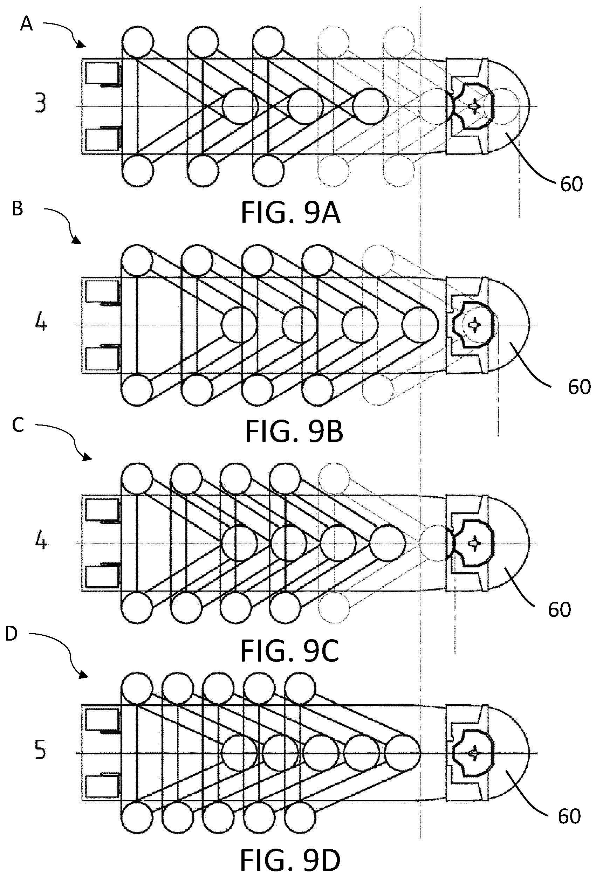

Figures 9A-9D show a comparison of stowing efficiency between sets of hull structures with different hull structure design A-D. Figures 9A-9C show hull structure designs A-C where the first angle α equals the second angle β (see figures 2A and 3A for cases where β > α).

The difference between designs A-C is the position of the first and second pontoon structures: in design A they are positioned at the inside of the columns (fig. 9A); in design B they are positioned at the outside of the columns (fig. 9B); and in design C they are positioned centrally onto the columns (fig. 9A), similar to the hull structure 10 shown in figure 1.

Design D forms an example of hull structures where β > α, similar to the hull structure 30 shown in e.g. figure 3A.

All designs A-D have the same column diameters and pontoon structure breadth/width.

As show in figures 9A-9D, the number of hull structures that can be stowed on a given length of the deck of the vessel 60 is 3 for design A, 4 for designs B and C, and 5 for design D. It is thus clear that arranging the hull structure so that β > α further improves the stowage efficiency of this type of A-shaped hull structures (i.e. stowable A-shaped hull structures with a lower third pontoon structure).

Thin lines in figures 9A-9C indicate a fourth and fifth hull structures in figure 9A and a fifth hull structure in figures 9B and 9C to show the corresponding length of five full structures of the different designs. These indicated additional hull structures do not fit onto the vessel 60.

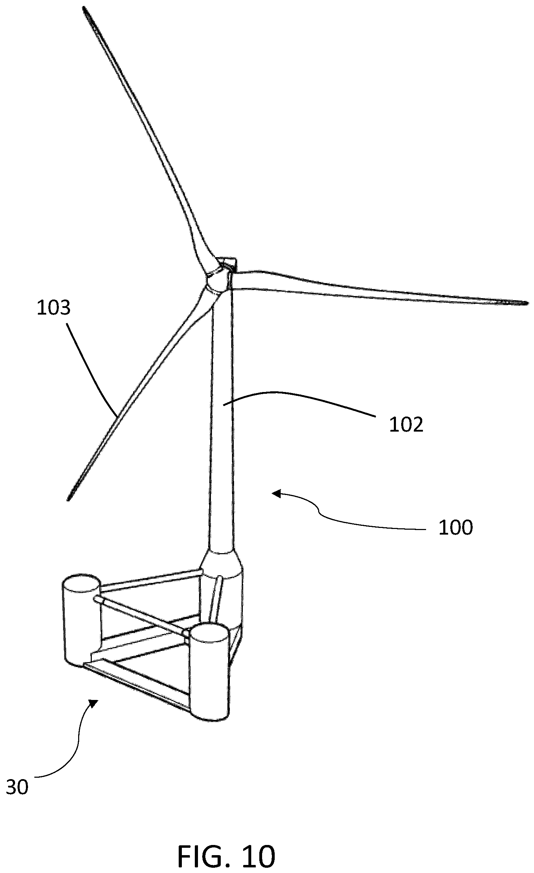

Figure 10 shows a semi-submersible wind power turbine platform 100 comprising a hull structure 30 according to figure 4. The platform 100 is provided with a wind turbine tower 102 in turn provided with three blades 103 (as well as a generator etc., which is not shown in the figures).

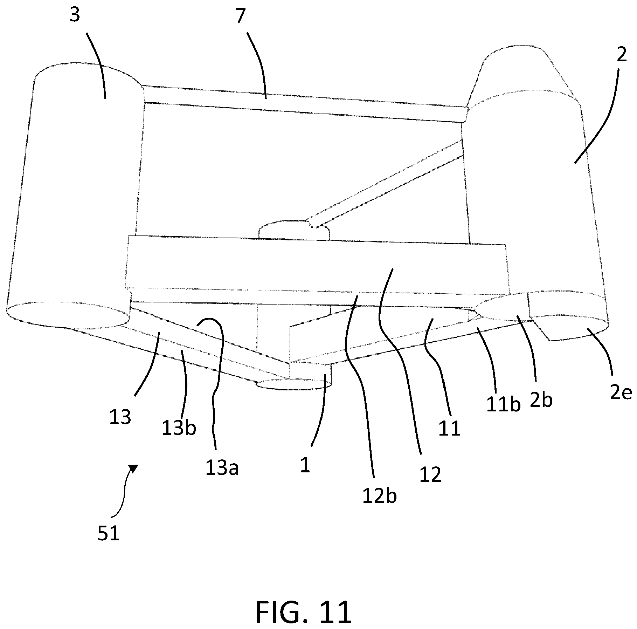

Figure 11-16 show embodiments of hull structure 50, 51 similar to what is described above but wherein each of the first and second pontoon structures 11, 12 has a lower side 11b, 12b facing downwards and wherein the upper side 13a of the third pontoon structure 13 is substantially aligned with, or is located at a lower level than, the lower sides 11b, 12b of the first and second pontoon structures 11, 12.

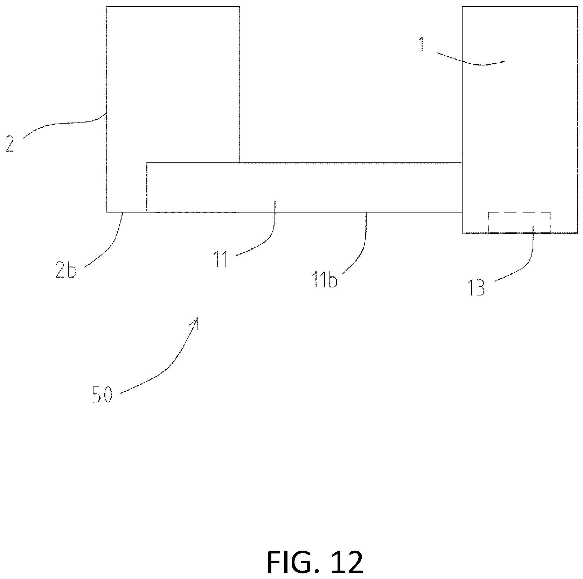

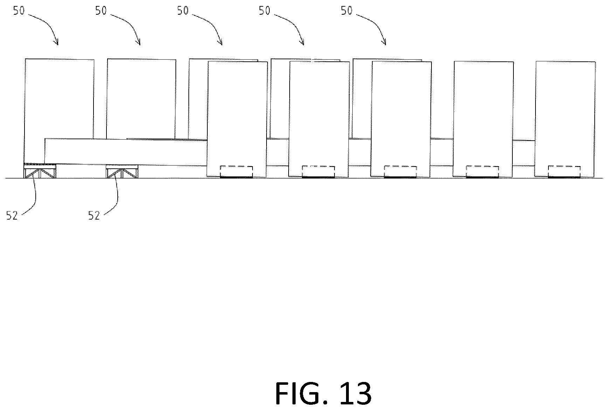

In the hull structure 50 shown in figures 12 and 13, the lower sides 11b, 12b of the first and second pontoon structures 11, 12 are substantially aligned with the entire downwardly facing lower side 2b of the second buoyant stabilizing columns 2.

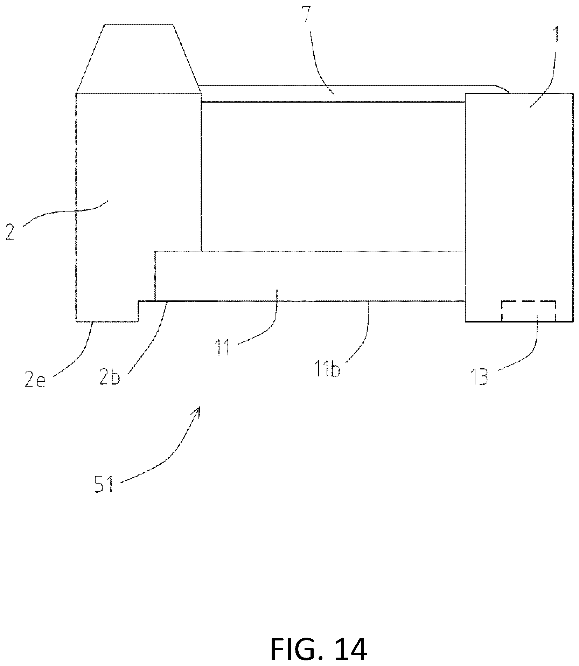

In the hull structure 51 shown in figures 11, 14 and 15, the lower sides 11b, 12b of the first and second pontoon structures 11, 12 are substantially aligned with only a portion of the downwardly facing lower side 2b of the second buoyant stabilizing column 2. Another portion 2e of the downwardly facing lower side 2b of the second buoyant stabilizing columns 2 is located at a lower level. As best shown in figure 14, the (second) portion 2e located at the lower level is substantially aligned with the underside 13b of the third pontoon 13 as well as the underside of each of the first and third columns 1, 3.

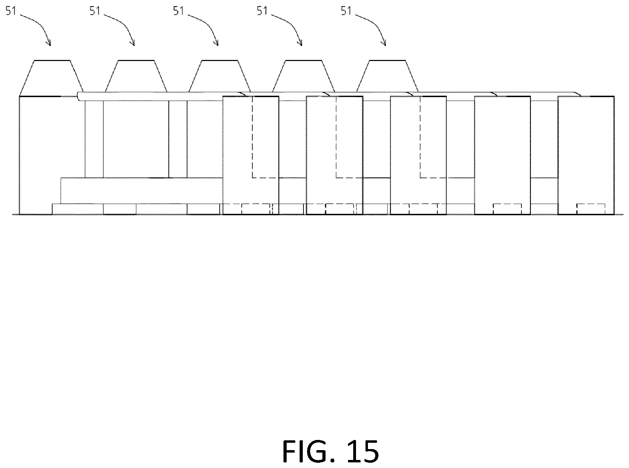

Figure 13 shows a set of hull structures according to figure 12 stowed in a row and figure 15 shows a set of hull structures according to figures 11 and 14 stowed in a row.

To hold a hull structure according to figure 12 in a substantially horizontal position when there is no supporting third pontoon available, such as when the platform is located at an end of a row of similar platforms or during assembly, it is possible to arrange a separate support structure 52 beneath the second column, see figure 13.

A hull structure according to figures 11 and 14 is positioned substantially horizontally without any separate support structure 52 since the underside of the third pontoon 3, the underside of the first and third columns 1, 3 and the (second) portion 2e of the underside of the second column 2 are aligned with each other, see figures 11, 14 and 15.

A hull structure according to figures 11-16 may be positioned horizontally with a small step in or an inclination portion of the underside of the bottom of the first 11b and second 12b pontoons to allow cribbing between the first and second pontoons and the upper side 13a of neighbouring hull structures.

A hull structure according to figures 11-16 may be positioned with a small inclination (e.g. 1-2 degrees) to allow cribbing to be arranged between the underside of the bottom of the first 11b and second 12b pontoons and the upper side 13a of neighbouring hull structures and where wedge-shaped cribbing of varying height is arranged underneath the underside third pontoon 13b.

Also in the embodiments of figures 11-16, the pontoons 11, 12, 13 are connected to the lower part of the columns 1, 2, 3, i.e. the pontoons will typically be located below the surface when the wind power turbine platform is in operation.

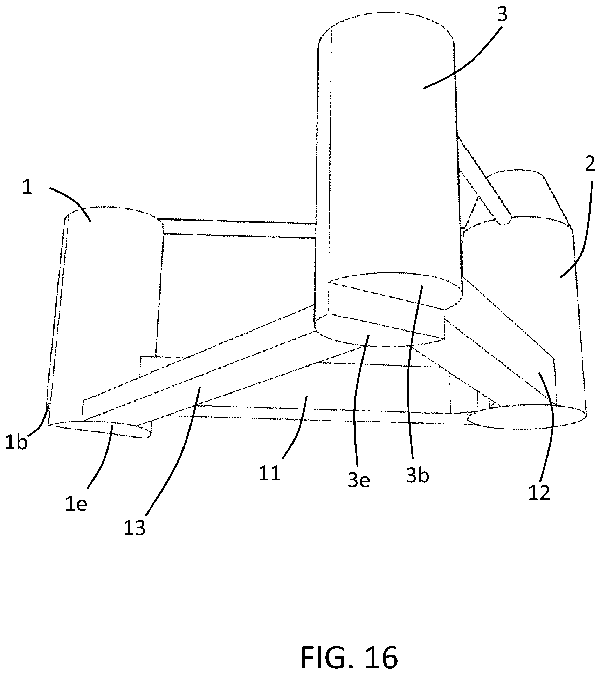

In the hull structure shown in figure 16, the lower side of the first and third columns 1, 3 has one portion 1e, 3e located at a lower level and another portion (indicated as 1b and 3b in figure 16) located at a higher level. In this example, the lower portions 1e, 3e are aligned with the lower side 13b of third pontoon 13 and the upper portions 1b, 3b are aligned with lower sides 11b, 12b of the first and second pontoons 11, 12. The upper portions 1b, 3b provide points useful for lifting and moving a platform on land using e.g. so-called self-propelled module transporters. Any of the hull structures of this disclosure may be provided with such upper portions/lifting points.

The invention is not limited by the embodiments described above but can be modified in various ways within the scope of the claims. For instance, the cross section of the columns and pontoon structures may be different than exemplified, such as polygonal columns and circular or polygonal pontoon structures.

### Reference numbers

1 - first buoyant stabilizing column
2 - second buoyant stabilizing column
3 - third buoyant stabilizing column
   1a, 2a, 3a - upper side of columns
   1b, 2b, 3b - lower side of columns
   1c, 2c, 3c - lower part of columns
   2d - outer side of second columns
   1e - lower level of 1b
   2e - lower level of 2b
   3e - lower level of 3b
5 - supporting structure
6 - supporting surface on supporting structure 5
7 - bracing
10, 20, 30, 40, 50, 51 - hull structure
11 - first elongated submersible pontoon structure
12 - second elongated submersible pontoon structure
13 - third elongated submersible pontoon structure
   11a, 12a, 13a - upper side of pontoon structures
   11b, 12b, 13b - lower side of pontoon structures
   11c, 12c - central longitudinal axis of the first and second
   pontoon structures
   11d, 12d - outer side of the first and second pontoon structures
α - first angle in the horizontal plane between central longitudinal axes of the first and second pontoon structures
21 - first imaginary line between central points of the first and second stabilizing columns
22 - second imaginary line between central points of the second and third stabilizing columns
β - second angle in the horizontal plane between a first and second imaginary lines
52 - support structure
60 - marine transportation vessel
65 - deck on marine transportation vessel
66 - first additional support
67 - second additional support
100 - semi-submersible wind power turbine platform
101 - support for wind turbine tower
102 - wind turbine tower
103 - wind turbine blade
130 - inclined surface on lower side of third pontoon structure
140 - inclined surface on upper side of third pontoon structure
γ - inclination angle

## Claims

1. A hull structure (10, 20, 30, 30a-30d, 40, 50, 51) for a semi-submersible wind power turbine platform (100), wherein the hull structure (10) comprises:
first, second and third buoyant stabilizing columns (1, 2, 3) extending in a substantially vertical direction; and
first, second and third elongated submersible buoyant pontoon structures (11, 12, 13) extending in a substantially horizontal direction;
wherein the hull structure (10, 20, 30, 40) has a general shape of a triangle in the horizontal plane with the first, second and third pontoon structures (11, 12, 13) forming sides of the triangle;
wherein the first pontoon structure (11) extends between and connects the first and the second column (1, 2) and wherein the first pontoon structure (11) is connected to a lower part (1c, 2c) of each of the first and second columns (1, 2);
wherein the second pontoon structure (12) extends between and connects the second and the third column (2, 3) and wherein the second pontoon structure (12) is connected to a lower part (2c, 3c) of each of the second and third columns (2, 3);
wherein the third pontoon structure (13) extends between and connects the first and the third column (1, 3) at the lower parts (1c, 3c) thereof;
wherein each of the first, second and third pontoon structures (11, 12, 13) has an upper side (11a, 12a, 13a) facing upwards;
wherein the third pontoon structure (13) has a height that is less than that of each of the first and second pontoon structures (11, 12); and
wherein the third pontoon structure (13) is arranged so that the upper side (13a) thereof is located at a lower level than the upper side (11a, 12a) of each of the first and second pontoon structures (11, 12).

2. The hull structure (10, 20, 30, 40) according to claim 1, wherein each of the first, second and third pontoon structures (11, 12, 13) has a lower side (11b, 12b, 13b) facing downwards and wherein the lower sides of the first, second and third pontoon structures are substantially aligned with each other in the horizontal plane.

3. The hull structure (10, 20, 30, 40) according to claim 2, wherein the lower sides (11b, 12b, 13b) of the first, second and third pontoon structures (11, 12, 13) are substantially aligned with downwardly facing lower sides (1b, 2b, 3b) of each of the first, second and third buoyant stabilizing columns (1, 2, 3).

4. The hull structure (50, 51) according to claim 1, wherein each of the first and second pontoon structures (11, 12) has a lower side (11b, 12b) facing downwards and wherein the upper side (13a) of the third pontoon structure (13) is substantially aligned with, or is located at a lower level than, the lower sides (11b, 12b) of the first and second pontoon structures (11, 12).

5. The hull structure (50, 51) according to claim 4, wherein the lower sides (11b, 12b) of the first and second pontoon structures (11, 12) are substantially aligned with a downwardly facing lower side (2b) of the second buoyant stabilizing columns (2).

6. The hull structure (50, 51) according to claim 4, wherein the lower sides (11b, 12b) of the first and second pontoon structures (11, 12) are substantially aligned with a portion of a downwardly facing lower side (2b) of the second buoyant stabilizing column (2), wherein another portion of the downwardly facing lower side (2b) of the second buoyant stabilizing columns (2) is located at a lower level.

7. The hull structure (50, 51) according to any of claims 4-6, wherein the lower side (13b) of the third pontoon structure is substantially aligned with a portion of each of the downwardly facing lower sides (1e, 3e) of the first and third buoyant stabilizing columns (1, 3), wherein another portion of the downwardly facing lower side (1b, 3b) of each of the first and third buoyant stabilizing columns (1, 3) is located at a higher level.

8. The hull structure (10, 20, 30, 40, 50, 51) according to any of the above claims, wherein the height of the third pontoon structure (13) is less than 75%, preferably less than 50%, of the height of at least one of the first and second pontoon structures (11, 12).

9. The hull structure (10, 20, 30, 40, 50, 51) according to any of the above claims, wherein the hull structure exhibits:
i) a first angle (α) in the horizontal plane between a central longitudinal axis (11c) of the first pontoon structure (11) and a central longitudinal axis (12c) of the second pontoon structure (12); and
ii) a second angle (β) in the horizontal plane between a) a first imaginary line (21) between a central point of the first stabilizing column (1) and a central point of the second stabilizing column (2) and b) a second imaginary line (22) between the central point of the second stabilizing column (2) and a central point of the third stabilizing column (3),
wherein the second angle (β) is larger than the first angle (α).

10. The hull structure (20, 30) according to any of the above claims, wherein at least an outer part of a lower side (13b) of the third pontoon structure (13) is inclined in relation to the horizontal plane so as to form an inclined surface (130), wherein the inclination is directed so that the outer part of the lower side (13b) of the third pontoon structure (13) is located on a higher vertical level than an inner part of the lower side (13b) of the third pontoon structure (13), wherein the inner part is located closer to the second stabilizing column (2) than the outer part.

11. The hull structure (20, 30, 40) according to any of the above claims, wherein the hull structure comprises a supporting structure (5) arranged at the second stabilizing column (2) between the first and second pontoon structures (11, 12), wherein the supporting structure (5) is provided with a supporting surface (6) arranged at substantially the same vertical height as the upper side (13a) of the third pontoon structure (13).

12. Method for loading a set of hull structures (10, 20, 30, 30a-30d, 40, 50, 51) onto a semi-submersible cargo carrying marine vessel (60) configured to be lowered partly below the water surface into a lower position and be raised to an upper position so as to load onto the vessel cargo that is located at the water surface above the vessel, wherein the set of hull structures comprises at least a first (40, 30a) and a second hull structure (30a, 30b) arranged according to any of the above claims, the method comprising:
- providing the set of hull structures (30a-30d, 40) floating in water;
- arranging the set of hull structures (30a-30d, 40) in a row above the marine vessel (60) when the marine vessel is in its lower position; and
- raising the marine vessel (60) to its upper position so as to load the row of hull structures (30a-30d, 40) onto the marine vessel (60).

13. Method according to claim 12, wherein arranging the set of hull structures (30a-30d, 40) in the row comprises:
- arranging the first and second hull structures (40, 30a, 30b) adjacent each other and so that the second hull structure (30a, 30b) is located above the third pontoon structure of the first hull structure (40, 30a) with the second column of the second hull structure (30a, 30b) positioned between the first and second pontoon structures of the first hull structure (40, 30a) , wherein the second column of the second hull structure (30a, 30b) is positioned closer to the second column of the first hull structure (40, 30a) than to the first and third columns of the first hull structure (40, 30a).

14. Method according to claim 12, wherein arranging the set of hull structures (50, 51) in the row comprises:
- arranging the first and second hull structures adjacent each other and so that the first and second pontoon structure (11, 12) of the second hull structure is located above the third pontoon structure (13) of the first hull structure with the second column of the second hull structure positioned between the first and second pontoon structures (11, 12) of the first hull structure, wherein the second column (2) of the second hull structure is positioned closer to the second column (2) of the first hull structure than to the first and third columns (1, 3) of the first hull structure.

15. Marine vessel (60) carrying a set of hull structures (10, 20, 30, 30a-30d, 40, 50, 51), wherein the set of hull structures comprises at least a first and a second hull structure (40, 30a, 30b, 50, 51) arranged according to any of claims 1-11.

16. Marine vessel (60) according to claim 15, wherein the set of hull structures (30a-30d, 40, 50, 51) are arranged in a row with the first and second hull structures (40, 30a, 30b, 50, 51) located adjacent each other, wherein the second hull structure (30b) is located above the third pontoon structure (13) of the first hull structure (30a) with the second column (2) of the second hull structure (30b) positioned between the first and second pontoon structures (11, 12) of the first hull structure (30a), wherein the second column (2) of the second hull structure (30b) is positioned closer to the second column (2) of the first hull structure (30a) than to the first and third columns (1, 3) of the first hull structure (30a).

## Patentansprüche

1. Rumpfstruktur (10, 20, 30, 30a-30d, 40, 50, 51) für eine halbtauchfähige Windturbinenplattform (100), wobei die Rumpfstruktur (10) Folgendes umfasst:
eine erste, eine zweite und eine dritte schwimmfähige Stabilisierungssäule (1, 2, 3), die sich in einer im Wesentlichen vertikalen Richtung erstrecken; und
eine erste, eine zweite und eine dritte längliche tauchfähige schwimmfähige Pontonstruktur (11, 12, 13), die sich in einer im Wesentlichen horizontalen Richtung erstrecken;
wobei die Rumpfstruktur (10, 20, 30, 40) eine allgemeine Form eines Dreiecks in der horizontalen Ebene aufweist, wobei die erste, die zweite und die dritte Pontonstruktur (11, 12, 13) Seiten des Dreiecks bilden;
wobei sich die erste Pontonstruktur (11) zwischen der ersten und der zweiten Säule (1, 2) erstreckt und diese verbindet und wobei die erste Pontonstruktur (11) mit einem unteren Teil (1c, 2c) jeder der ersten und der zweiten Säule (1, 2) verbunden ist;
wobei sich die zweite Pontonstruktur (12) zwischen der zweiten und der dritten Säule (2, 3) erstreckt und diese verbindet und wobei die zweite Pontonstruktur (12) mit einem unteren Teil (2c, 3c) jeder der zweiten und der dritten Säule (2, 3) verbunden ist;
wobei sich die dritte Pontonstruktur (13) zwischen der ersten und der dritten Säule (1, 3) an dem unteren Teil davon (1c, 3c) erstreckt und diese verbindet;
wobei jede der ersten, der zweiten und der dritten Pontonstruktur (11, 12, 13) eine obere Seite (11a, 12a, 13a) aufweist, die aufwärts gewandt ist;
wobei die dritte Pontonstruktur (13) eine Höhe aufweist, die kleiner als jene jeder der ersten und der zweiten Pontonstruktur (11, 12) ist; und
wobei die dritte Pontonstruktur (13) so angeordnet ist, dass sich die obere Seite (13a) davon auf einem niedrigeren Niveau als die obere Seite (11a, 12a) jeder der ersten und der zweiten Pontonstruktur (11, 12) befindet.

2. Rumpfstruktur (10, 20, 30, 40) nach Anspruch 1, wobei jede der ersten, der zweiten und der dritten Pontonstruktur (11, 12, 13) eine untere Seite (11b, 12b, 13b) aufweist, die abwärts gewandt ist, und wobei die untere Seite der ersten, der zweiten und der dritten Pontonstruktur in der horizontalen Ebene im Wesentlichen fluchtet.

3. Rumpfstruktur (10, 20, 30, 40) nach Anspruch 2, wobei die untere Seite (11b, 12b, 13b) der ersten, der zweiten und der dritten Pontonstruktur (11, 12, 13) mit einer abwärts gewandten unteren Seite (1b, 2b, 3b) jeder der ersten, der zweiten und der dritten schwimmfähigen Stabilisierungssäule (1, 2, 3) im Wesentlichen fluchtet.

4. Rumpfstruktur (50, 51) nach Anspruch 1, wobei jede der ersten und der zweiten Pontonstruktur (11, 12) eine untere Seite (11b, 12b) aufweist, die abwärts gewandt ist, und wobei die obere Seite (13a) der dritten Pontonstruktur (13) mit der unteren Seite (11b, 12b) der ersten und der zweiten Pontonstruktur (11, 12) im Wesentlichen fluchtet oder sich auf einem niedrigeren Niveau als diese befindet.

5. Rumpfstruktur (50, 51) nach Anspruch 4, wobei die untere Seite (11b, 12b) der ersten und der zweiten Pontonstruktur (11, 12) mit einer abwärts gewandten unteren Seite (2b) der zweiten schwimmfähigen Stabilisierungssäulen (2) im Wesentlichen fluchtet.

6. Rumpfstruktur (50, 51) nach Anspruch 4, wobei die untere Seite (11b, 12b) der ersten und der zweiten Pontonstruktur (11, 12) mit einem Abschnitt einer abwärts gewandten unteren Seite (2b) der zweiten schwimmfähigen Stabilisierungssäule (2) im Wesentlichen fluchtet, wobei sich ein anderer Abschnitt der abwärts gewandten unteren Seite (2b) der zweiten schwimmfähigen Stabilisierungssäulen (2) auf einem niedrigeren Niveau befindet.

7. Rumpfstruktur (50, 51) nach einem der Ansprüche 4-6, wobei die untere Seite (13b) der dritten Pontonstruktur mit einem Abschnitt jeder der abwärts gewandten unteren Seite (1e, 3e) der ersten und der dritten schwimmfähigen Stabilisierungssäule (1, 3) im Wesentlichen fluchtet, wobei sich ein anderer Abschnitt der abwärts gewandten unteren Seite (1b, 3b) jeder der ersten und der dritten schwimmfähigen Stabilisierungssäule (1, 3) auf einem höheren Niveau befindet.

8. Rumpfstruktur (10, 20, 30, 40, 50, 51) nach einem der vorhergehenden Ansprüche, wobei die Höhe der dritten Pontonstruktur (13) kleiner als 75 %, bevorzugt kleiner als 50 %, der Höhe mindestens einer der ersten und der zweiten Pontonstruktur (11, 12) ist.

9. Rumpfstruktur (10, 20, 30, 40, 50, 51) nach einem der vorhergehenden Ansprüche, wobei die Rumpfstruktur Folgendes aufweist:
i) einen ersten Winkel (α) in der horizontalen Ebene zwischen einer mittigen Längsachse (11c) der ersten Pontonstruktur (11) und einer mittigen Längsachse (12c) der zweiten Pontonstruktur (12); und
ii) einen zweiten Winkel (β) in der horizontalen Ebene zwischen a) einer ersten gedachten Linie (21) zwischen einem mittigen Punkt der ersten Stabilisierungssäule (1) und einem mittigen Punkt der zweiten Stabilisierungssäule (2) und b) einer zweiten gedachten Linie (22) zwischen dem mittigen Punkt der zweiten Stabilisierungssäule (2) und einem mittigen Punkt der dritten Stabilisierungssäule (3),
wobei der zweite Winkel (β) größer als der erste Winkel (α) ist.

10. Rumpfstruktur (20, 30) nach einem der vorhergehenden Ansprüche, wobei mindestens ein äußerer Teil einer unteren Seite (13b) der dritten Pontonstruktur (13) in Bezug auf die horizontale Ebene geneigt ist, um eine geneigte Oberfläche (130) zu bilden, wobei die Neigung so gerichtet ist, dass sich der äußere Teil der unteren Seite (13b) der dritten Pontonstruktur (13) auf einem höheren vertikalen Niveau als ein innerer Teil der unteren Seite (13b) der dritten Pontonstruktur (13) befindet, wobei sich der innere Teil näher an der zweiten Stabilisierungssäule (2) als der äußere Teil befindet.

11. Rumpfstruktur (20, 30, 40) nach einem der vorhergehenden Ansprüche, wobei die Rumpfstruktur eine Stützstruktur (5) umfasst, die an der zweiten Stabilisierungssäule (2) zwischen der ersten und der zweiten Pontonstruktur (11, 12) angeordnet ist, wobei die Stützstruktur (5) mit einer Stützfläche (6) versehen ist, die auf im Wesentlichen der gleichen vertikalen Höhe wie die obere Seite (13a) der dritten Pontonstruktur (13) angeordnet ist.

12. Verfahren zum Laden eines Satzes von Rumpfstrukturen (10, 20, 30, 30a-30d, 40, 50, 51) auf ein halbtauchfähiges Frachtschiff (60), das dazu konfiguriert ist, teilweise unter die Wasseroberfläche in eine untere Position abgesenkt und auf eine obere Position angehoben zu werden, um eine Fracht auf das Schiff zu laden, die sich auf der Wasseroberfläche über dem Schiff befindet, wobei der Satz von Rumpfstrukturen mindestens eine erste (40, 30a) und eine zweite Rumpfstruktur (30a, 30b) umfasst, die nach einem der vorhergehenden Ansprüche angeordnet sind, wobei das Verfahren Folgendes umfasst:
- Bereitstellen des Satzes von Rumpfstrukturen (30a-30d, 40), der auf Wasser treibt;
- Anordnen des Satzes von Rumpfstrukturen (30a-30d, 40) in einer Reihe über dem Schiff (60), wenn das Schiff in seiner unteren Position liegt; und
- Anheben des Schiffes (60) auf seine obere Position, um die Reihe von Rumpfstrukturen (30a-30d, 40) auf das Schiff (60) zu laden.

13. Verfahren nach Anspruch 12, wobei das Anordnen des Satzes von Rumpfstrukturen (30a-30d, 40) in der Reihe Folgendes umfasst:
- Anordnen der ersten und der zweiten Rumpfstruktur (40, 30a, 30b) benachbart zueinander und solcherweise, dass sich die zweite Rumpfstruktur (30a, 30b) über der dritten Pontonstruktur der ersten Rumpfstruktur (40, 30a) befindet, wobei die zweite Säule der zweiten Rumpfstruktur (30a, 30b) zwischen der ersten und der zweiten Pontonstruktur der ersten Rumpfstruktur (40, 30a) positioniert ist, wobei die zweite Säule der zweiten Rumpfstruktur (30a, 30b) näher an der zweiten Säule der ersten Rumpfstruktur (40, 30a) als an der ersten und der dritten Säule der ersten Rumpfstruktur (40, 30a) positioniert ist.

14. Verfahren nach Anspruch 12, wobei das Anordnen des Satzes von Rumpfstrukturen (50, 51) in der Reihe Folgendes umfasst:
- Anordnen der ersten und der zweiten Rumpfstruktur benachbart zueinander und solcherweise, dass sich die erste und die zweite Pontonstruktur (11, 12) der zweiten Rumpfstruktur über der dritten Pontonstruktur (13) der ersten Rumpfstruktur befindet, wobei die zweite Säule der zweiten Rumpfstruktur zwischen der ersten und der zweiten Pontonstruktur (11, 12) der ersten Rumpfstruktur positioniert ist, wobei die zweite Säule (2) der zweiten Rumpfstruktur näher an der zweiten Säule (2) der ersten Rumpfstruktur als an der ersten und der dritten Säule (1, 3) der ersten Rumpfstruktur positioniert ist.

15. Schiff (60), das einen Satz von Rumpfstrukturen (10, 20, 30, 30a-30d, 40, 50, 51) trägt, wobei der Satz von Rumpfstrukturen mindestens eine erste und eine zweite Rumpfstruktur (40, 30a, 30b, 50, 51) umfasst, die nach einem der Ansprüche 1-11 angeordnet sind.

16. Schiff (60) nach Anspruch 15, wobei der Satz von Rumpfstrukturen (30a-30d, 40, 50, 51) in einer Reihe angeordnet ist, wobei sich die erste und die zweite Rumpfstruktur (40, 30a, 30b, 50, 51) zueinander benachbart befinden, wobei sich die zweite Rumpfstruktur (30b) über der dritten Pontonstruktur (13) der ersten Rumpfstruktur (30a) befindet, wobei die zweite Säule (2) der zweiten Rumpfstruktur (30b) zwischen der ersten und der zweiten Pontonstruktur (11, 12) der ersten Rumpfstruktur (30a) positioniert ist, wobei die zweite Säule (2) der zweiten Rumpfstruktur (30b) näher an der zweiten Säule (2) der ersten Rumpfstruktur (30a) als an der ersten und der dritten Säule (1, 3) der ersten Rumpfstruktur (30a) positioniert ist.

## Revendications

1. Structure de coque (10, 20, 30, 30a-30d, 40, 50, 51) pour une plateforme d'éolienne semi-submersible (100), la structure de coque (10) comprenant :
des première, deuxième et troisième colonnes stabilisatrices flottantes (1, 2, 3) s'étendant dans une direction sensiblement verticale ; et
des première, deuxième et troisième structures de ponton flottant submersible allongées (11, 12, 13) s'étendant dans une direction sensiblement horizontale ;
dans laquelle la structure de coque (10, 20, 30, 40) présente une forme générale de triangle dans le plan horizontal, les première, deuxième et troisième structures de ponton (11, 12, 13) formant les côtés du triangle ;
dans laquelle la première structure de ponton (11) s'étend entre et relie les première et deuxième colonnes (1, 2) et dans laquelle la première structure de ponton (11) est reliée à une partie inférieure (1c, 2c) de chacune des première et deuxième colonnes (1, 2) ;
dans laquelle la deuxième structure de ponton (12) s'étend entre et relie les deuxième et troisième colonnes (2, 3) et dans laquelle la deuxième structure de ponton (12) est reliée à une partie inférieure (2c, 3c) de chacune des deuxième et troisième colonnes (2, 3) ;
dans laquelle la troisième structure de ponton (13) s'étend entre et relie les première et troisième colonnes (1, 3) au niveau de leurs parties inférieures (1c, 3c) ;
dans laquelle chacune des première, deuxième et troisième structures de ponton (11, 12, 13) a un côté supérieur (11a, 12a, 13a) tourné vers le haut ;
dans laquelle la troisième structure de ponton (13) a une hauteur qui est inférieure à celle de chacune des première et deuxième structures de ponton (11, 12) ; et
dans laquelle la troisième structure de ponton (13) est agencée de sorte que son côté supérieur (13a) est situé à un niveau inférieur à celui du côté supérieur (11a, 12a) de chacune des première et deuxième structures de ponton (11, 12).

2. Structure de coque (10, 20, 30, 40) selon la revendication 1, dans laquelle chacune des première, deuxième et troisième structures de ponton (11, 12, 13) a un côté inférieur (11b, 12b, 13b) tourné vers le bas et dans laquelle les côtés inférieurs des première, deuxième, et troisième structures de ponton sont sensiblement alignées l'une avec l'autre dans le plan horizontal.

3. Structure de coque (10, 20, 30, 40) selon la revendication 2, dans laquelle les côtés inférieurs (11b, 12b, 13b) des première, deuxième et troisième structures de ponton (11, 12, 13) sont sensiblement alignés avec les côtés inférieurs orientés vers le bas (1b, 2b, 3b) de chacune des première, deuxième et troisième colonnes de stabilisation flottantes (1, 2, 3).

4. Structure de coque (50, 51) selon la revendication 1, dans laquelle chacune des première et deuxième structures de ponton (11, 12) a un côté inférieur (11b, 12b) tourné vers le bas et dans laquelle le côté supérieur (13a) de la troisième structure de ponton (13) est sensiblement aligné avec ou est situé à un niveau inférieur aux côtés inférieurs (11b, 12b) des première et deuxième structures de ponton (11, 12).

5. Structure de coque (50, 51) selon la revendication 4, dans laquelle les côtés inférieurs (11b, 12b) des première et deuxième structures de ponton (11, 12) sont sensiblement alignés avec un côté inférieur orienté vers le bas (2b) des deuxièmes colonnes de stabilisation flottantes (2).

6. Structure de coque (50, 51) selon la revendication 4, dans laquelle les côtés inférieurs (11b, 12b) des première et deuxième structures de ponton (11, 12) sont sensiblement alignés avec une partie d'un côté inférieur orienté vers le bas (2b) de la deuxième colonne stabilisatrice flottante (2), dans laquelle une autre partie du côté inférieur orienté vers le bas (2b) des deuxièmes colonnes stabilisatrices flottantes (2) est située à un niveau inférieur.

7. Structure de coque (50, 51) selon l'une quelconque des revendications 4 à 6, dans laquelle le côté inférieur (13b) de la troisième structure de ponton est sensiblement aligné avec une partie de chacun des côtés inférieurs orientés vers le bas (1e, 3e) des première et troisième colonnes stabilisatrices flottantes (1, 3), dans laquelle une autre partie du côté inférieur orienté vers le bas (1b, 3b) de chacune des première et troisième colonnes stabilisatrices flottantes (1, 3) est située à un niveau supérieur.

8. Structure de coque (10, 20, 30, 40, 50, 51) selon l'une quelconque des revendications précédentes, dans laquelle la hauteur de la troisième structure de ponton (13) est inférieure à 75 %, de préférence inférieure à 50 %, de la hauteur d'au moins l'une des première et deuxième structures de ponton (11, 12).

9. Structure de coque (10, 20, 30, 40, 50, 51) selon l'une quelconque des revendications précédentes, dans laquelle la structure de coque présente :
i) un premier angle (α) dans le plan horizontal entre un axe longitudinal central (11c) de la première structure de ponton (11) et un axe longitudinal central (12c) de la deuxième structure de ponton (12) ; et
ii) un deuxième angle (β) dans le plan horizontal entre a) une première ligne imaginaire (21) entre un point central de la première colonne stabilisatrice (1) et un point central de la deuxième colonne stabilisatrice (2) et b) une deuxième ligne imaginaire (22) entre le point central de la deuxième colonne stabilisatrice (2) et un point central de la troisième colonne stabilisatrice (3),
dans laquelle le deuxième angle (β) est plus grand que le premier angle (α) .

10. Structure de coque (20, 30) selon l'une quelconque des revendications précédentes, dans laquelle au moins une partie extérieure d'un côté inférieur (13b) de la troisième structure de ponton (13) est inclinée par rapport au plan horizontal de manière à former une surface inclinée (130), l'inclinaison étant dirigée de sorte que la partie extérieure du côté inférieur (13b) de la troisième structure de ponton (13) soit située sur un niveau vertical plus élevé qu'une partie intérieure du côté inférieur (13b) de la troisième structure de ponton (13), la partie intérieure étant située plus près de la deuxième colonne stabilisatrice (2) que la partie extérieure.

11. Structure de coque (20, 30, 40) selon l'une quelconque des revendications précédentes, dans laquelle la structure de coque comprend une structure de support (5) agencée au niveau de la deuxième colonne de stabilisation (2) entre les première et deuxième structures de ponton (11, 12), dans laquelle la structure de support (5) est dotée d'une surface de support (6) agencée sensiblement à la même hauteur verticale que le côté supérieur (13a) de la troisième structure de ponton (13).

12. Procédé de chargement d'un ensemble de structures de coque (10, 20, 30, 30a-30d, 40, 50, 51) sur un navire marin de transport de marchandises semi-submersible (60) configuré pour être abaissé partiellement sous la surface de l'eau dans une position inférieure et être élevé dans une position supérieure de manière à charger sur le navire marin une cargaison qui est située à la surface de l'eau au-dessus du navire marin, dans lequel l'ensemble de structures de coque comprend au moins une première (40, 30a) et une deuxième structure de coque (30a, 30b) agencées selon l'une quelconque des revendications précédentes, le procédé comprenant :
- la fourniture de l'ensemble de structures de coque (30a-30d, 40) flottant dans l'eau ;
- l'agencement de l'ensemble de structures de coque (30a-30d, 40) en rangée au-dessus du navire marin (60) lorsque le navire marin est dans sa position inférieure ; et
- l'élévation du navire marin (60) jusqu'à sa position supérieure de manière à charger la rangée de structures de coque (30a-30d, 40) sur le navire marin (60).

13. Procédé selon la revendication 12, dans lequel l'agencement de l'ensemble de structures de coque (30a-30d, 40) dans la rangée comprend :
- l'agencement des première et deuxième structures de coque (40, 30a, 30b) adjacentes l'une à l'autre et de telle sorte que la deuxième structure de coque (30a, 30b) soit située au-dessus de la troisième structure de ponton de la première structure de coque (40, 30a) avec la deuxième colonne de la deuxième structure de coque (30a, 30b) positionnée entre les première et deuxième structures de ponton de la première structure de coque (40, 30a), la deuxième colonne de la deuxième structure de coque (30a, 30b) étant positionnée plus près de la deuxième colonne de la première structure de coque (40, 30a) que des première et troisième colonnes de la première structure de coque (40, 30a).

14. Procédé selon la revendication 12, dans lequel l'agencement de l'ensemble de structures de coque (50, 51) dans la rangée comprend :
- l'agencement des première et deuxième structures de coque adjacentes l'une à l'autre et de telle sorte que la première et la deuxième structure de ponton (11, 12) de la deuxième structure de coque soient situées au-dessus de la troisième structure de ponton (13) de la première structure de coque avec la deuxième colonne de la deuxième structure de coque positionnée entre les première et deuxième structures de ponton (11, 12) de la première structure de coque, la deuxième colonne (2) de la deuxième structure de coque étant positionnée plus près de la deuxième colonne (2) de la première structure de coque que des première et troisième colonnes (1, 3) de la première structure de coque.

15. Navire marin (60) portant un ensemble de structures de coque (10, 20, 30, 30a-30d, 40, 50, 51), dans lequel l'ensemble de structures de coque comprend au moins une première et une deuxième structure de coque (40, 30a, 30b, 50, 51) agencées selon l'une quelconque des revendications 1 à 11.

16. Navire marin (60) selon la revendication 15, dans lequel l'ensemble de structures de coque (30a-30d, 40, 50, 51) est agencé en une rangée avec les première et deuxième structures de coque (40, 30a, 30b, 50, 51) situées adjacentes l'une à l'autre, dans lequel la deuxième structure de coque (30b) est située au-dessus de la troisième structure de ponton (13) de la première structure de coque (30a) avec la deuxième colonne (2) de la deuxième structure de coque (30b) positionnée entre les première et deuxième structures de ponton (11, 12) de la première structure de coque (80a), dans lequel la deuxième colonne (2) de la deuxième structure de coque (30b) est positionnée plus près de la deuxième colonne (2) de la première structure de coque (30a) que des première et troisième colonnes (1, 3) de la première structure de coque (30a).
